# EUROPÄISCHE PATENTANMELDUNG

(11) **EP 1 003 086 A2**
(43) Veröffentlichungstag der Anmeldung: **24.05.2000**
(21) Anmeldenummer: 99121838.9
(22) Anmeldetag: 04.11.1999
(51) Int. Cl.: G05B 19/042

(54) **Verfahren zum Überwachen und/oder Steuern von Einrichtungen**

(30) Priorität: 18.11.1998 DE 19853088; 17.02.1999 DE 19906627
(71) Anmelder: SCHAKO METALLWARENFABRIK FERDINAND SCHAD KG, 78600 Kolbingen (DE)
(72) Erfinder: Müller, Gottfried, 78600 Kolbingen (DE)
(74) Vertreter: Weiss, Peter, Dr.

(57) **Zusammenfassung**

Bei einem Verfahren zum Überwachen und/oder Steuern von Einrichtungen (1.1 - 1.5), beispielsweise von Türen, Fenstern, Brandschutzklappen usw., deren Status von Sensoren überwacht und von Antrieben verändert wird, stehen die Sensoren über ein Datensignale übertragendes BUS-System mit einer Zentrale in Verbindung. Dabei erfolgt auch die Stromversorgung für die Antriebe der Einrichtungen über die Leitungsverbindungen des BUS-Systems (6) des BUS-Systems.

## Beschreibung

Die Erfindung betrifft ein Verfahren zum Überwachen und/oder Steuern von Einrichtungen, beispielsweise von Türen, Fenstern, Brandschutzklappen usw., deren Status von Sensoren überwacht und von Antrieben verändert wird, wobei die Sensoren und Antriebe über ein BUS-System mit einer Zentrale in Verbindung stehen, sowie eine Anlage hierfür.

Immer größere Bedeutung nimmt die Gebäudeüberwachungstechnik ein. Durch die Einführung der BUS-Technologie, wie beispielsweise der European Installation BUS-Technologie (EIB) in die Gebäudeüberwachungstechnik ist es möglich, eine Vielzahl von Einrichtungen für ein Gebäude von einer Zentrale aus zu überwachen. Hierzu zählt vor allem das Überwachen und Steuern von Einrichtungen, die geöffnet bzw. geschlossen werden. Dies sind beispielsweise Türen, Fenster, Jalousien, Brandschutzklappen in Klimaanlagen usw.. Zur Überwachung gehört dabei auch die Anzeige des Status von Beleuchtungskörpern, das Regeln von Heizungselementen, eine Temperaturüberwachung usw.. In der modernen Gebäudeüberwachungstechnik werden alle diese Einrichtungen zentral von einer Zentrale aus überwacht und beobachtet. Eine Steuerung ist allerdings bis heute nur für Beleuchtungskörper, Temperatur oder dgl. möglich, für Antriebe ist eine Steuerung außerordentlich aufwendig, da für jeden Antrieb von der Zentrale aus für die Stromversorgung des Antriebs eigene Kabel gelegt werden müssen. Bei der Länge der Kabel kommt es dabei zu erheblichen Spannungsverlusten, so dass eine Stromversorgung von der Zentrale aus unrentabel ist.

Der vorliegenden Erfindung liegt die Aufgabe zugrunde, ein Verfahren und eine Anlage der oben genannten Art zu schaffen, mit der auch eine Stromversorgung der einzelnen Antriebe für die Einrichtungen von der Zentrale aus möglich wird.

Zur Lösung dieser Aufgabe führt, dass die Stromversorgung für die Antriebe über die Leitungsverbindungen des BUS-Systems erfolgt.

Dies hat den Vorteil, dass die Stromversorgung im BUS-System in einer Schleife von der Zentrale und wieder zurück gelegt wird, wobei einzelne Antriebe in geringem räumlichen Abstand vor einer Brandschutzklappe oder einer anderen zum Antrieb gehörenden Einrichtung selbst ihre Stromversorgung über ein mehradriges Kabel des BUS-Systems erhalten können. Kurz vor der Einrichtung erfolgt eine Aufteilung in eine Überwachungsleitung und eine Leitung für die Stromversorgung. Hierdurch ist es möglich, ohne große Spannungsverluste beispielsweise 35 Brandschutzklappen auf einen BUS aufzuschalten, wobei jede Brandschutzklappe über eine Überwachungsleitung und eine Leitung für die Stromversorgung mit einem Verteiler verbunden ist, der im BUS-System die Abzweigung der Stromversorgung auf eine separate Leitung übernimmt.

Die BUS-Leitung des BUS-Systems kann als mehradriges Datenkabel mit einem Leitungsquerschnitt von weniger als 1 mm² pro Leitungsader ausgebildet sein. Dabei kann es sich um ein 5-adriges geschirmtes Datenkabel handeln, bei dem zwei Adern die Stromversorgung für die unterschiedlichen Einrichtungen übernehmen können. Trotz des geringen Querschnitts der einzelnen Adern können über eine Stromversorgungseinheit 200 oder mehr Einrichtungen betrieben werden, da die einzelnen Einheiten separat ansteuerbar und somit zeitlich versetzt elektrisch betätigt werden können. Die Betätigung von Brandschutzklappen mittels elektrischer Stellantriebe kann dabei in der Weise erfolgen, daß einzelne oder einige wenige Brandschutzklappen gleichzeitig angesteuert und elektromotorisch betätigt werden, wobei die Zentrale die Einrichtungen so ansteuert, daß eine Überlastung der Stromversorgungseinheiten nicht entsteht.

Die erfindungsgemäße Anlage kann dabei so ausgebildet sein, daß in größeren Abständen an die BUS-Leitung Stromversorgungseinheiten, die auch als Leitungs-Booster bezeichnet werden können, angeschlossen sind. Dadurch wird das gesamte Stromversorgungs- und Überwachungssystem beliebig erweiterbar und es lassen sich insbesondere auch größere Leitungsstrecken, wie sie in Industriebetrieben oder Flugplatzgebäuden auftreten, problemlos realisieren.

Dabei ist es besonders vorteilhaft, eine Potentialtrennung zwischen Steuerleitungen des BUS-Systems und den stromverbrauchenden Einrichtungen vorzusehen. Die Potentialtrennung kann mittels Optokoppler realisiert werden, so daß dadurch gewährleistet ist, daß unterschiedliche Potentiale im Bereich der zu betätigenden Einrichtungen bezogen auf die Steuerleitungen zu keinen elektrischen Differenzspannungsproblemen führen. Die Stromversorgung der Antriebe oder anderer Leistungsverbraucher kann dabei so erfolgen, daß die von den Stromversorgungseinheiten abgegebene Versorgungsspannung, die beispielsweise im Bereich von 40 Volt und 80 Volt liegt, auf eine erforderliche geringere Betriebsspannung der Antriebe reduziert wird. Dadurch erhält man den Vorteil, daß die über größere Leitungsstrecken sich reduzierende Versorgungsspannung in eine vorgegebene, konstante Betriebsspannung im Bereich der Antriebe umgewandelt werden kann. Die Betriebsspannung kann beispielsweise 24 Volt betragen, so daß ein Absinken der Versorgungsspannung über eine größere Leitungsstrecke auf einen Wert, der im Bereich der Betriebsspannung liegt, unproblematisch ist. Durch die Verwendung eines Schaltnetzteils im Bereich der Antriebe läßt sich sogar eine geringe Anhebung der Betriebsspannung erzielen. Es kann beispielsweise eine auf 22 Volt abgesunkene Versorgungsspannung mittels eines Schaltnetzteils auf die erforderlichen 24 Volt Betriebsspannung angehoben werden.

Das verwendete Schaltnetzteil kann die an einem Antrieb über die BUS-Leitung übertragene Versorgungsspannung in ein pulsweitenmoduliertes und/oder frequenzmoduliertes Signal umwandeln, welches durch Integration bzw. mittels eines Gleichrichters in eine als Betriebsspannung dienende Gleichspannung umwandelt.

Die erfindungsgemäße Anlage hat nicht nur den Vorteil, daß sich die Anzahl der zu überwachenden und anzusteuernden Antriebe oder anderer Einrichtungen beliebig erweitern läßt, sondern gestattet auch eine einfache Fehlerüberwachung anhand der Leistungsaufuahme der einzelnen elektrischen Verbraucher. Werden Überschreitungen vorgegebener Toleranzgrenzen festgestellt, so kann daraus beispielsweise auf die Schwergängigkeit der betätigten Einrichtungen geschlossen werden. Anhand der Leistungsaufnahme können auch weitere Fehler diagnostiziert und in der Zentrale der Anlage protokolliert und/oder an einem Display angezeigt werden. An einem solche Display kann auch der Betätigungsvorgang einer elektrischen Einrichtung optisch dargestellt werden. So können beispielsweise in einem Lüftungssystem eingebaute Brandschutzklappen in ihrer geöffneten Stellung durch eine grün aufleuchtende Leuchtdiode markiert werden, während bei geschlossener Brandschutzklappe die zugeordnete Leuchtdiode rot aufleuchtet. Während des Betätigungsvorganges kann die entsprechende Leuchtdiode dies durch blinken anzeigen.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Erfindung wird nachfolgend anhand der Zeichnung näher erläutert.

Es zeigen:
- Figur 1: eine blockschaltbildliche Darstellung einer erfindungsgemäßen Anlage zum Überwachen und/oder Steuern von Einrichtungen,
- Figur 2: das Prinzip der potentialfreien Ansteuerung der Einrichtungen und
- Figur 3: die Stromversorgung eines elektrischen Antriebs mit Ansteuerung über Optokoppler.

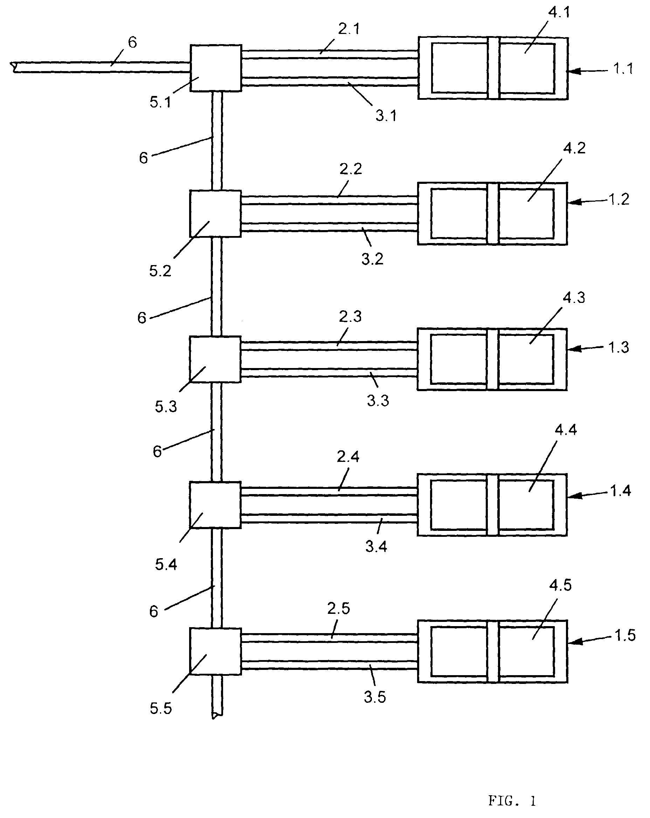

In Figur 1 sind als Einrichtungen Brandschutzklappen 1.1 bis 1.5 angedeutet. Jede Brandschutzklappe 1.1 bis 1.5 steht über eine Überwachungsleitung 2.1 bis 2.5 und eine Leitung 3.1 bis 3.5 für die Stromversorgung eines nicht näher gezeigten Antriebes für die Bewegung des Klappenblattes 4.1 bis 4.5 mit einem Verteiler 5.1 bis 5.5 in Verbindung.

Der Verteiler 5.1 ist in eine mehradrige BUS-Leitung 6 eingeschaltet, die wiederum alle Verteiler 5.1 bis 5.5 miteinander und mit einer nicht näher gezeigten Zentrale verbindet. Erfindungsgemäß erfolgt über die BUS-Leitung 6 sowohl die Stromversorgung für die einzelnen Antriebe der Brandschutzklappen 1.1 bis 1.5 als auch die Kommunikation zwischen nicht näher gezeigten Sensoren, welche die Stellung der Klappenblätter 4.1 bis 4.5 überwachen, und der nicht näher gezeigten Zentrale. Über die BUS-Leitung 6 des verwendeten BUS-Systems kann auch eine Adressierung der Sensoren und weiterer elektrischer Einrichtungen erfolgen, so dass in Verbindung mit der Adressierung auch eine Protokollierung von Betriebszuständen und/oder auftretenden Fehlfunktionen möglich ist.

Die Funktionsweise der vorliegenden Erfindung ist folgende:

Jedes Klappenblatt 4.1 bis 4.5 einer Brandschutzklappe 1.1 bis 1.5 wird über Sensoren überwacht. Mit diesen Sensoren kann festgestellt werden, ob sich eines der Klappenblätter 4.1 bis 4.5 in der Öffnungslage, eine Schließlage oder einer Zwischenlage befindet. Die Meldung des Status erfolgt über die Überwachungsleitung 2.1 bis 2.5, die in dem Verteiler 5.1 bis 5.5 in den BUS 6 einmündet.

Entsprechend dem festgestellten Status der Klappenblätter 4.1 bis 4.5 kann nun von der Zentrale aus ein Befehl an den Antrieb eines Klappenblattes 4.1 bis 4.5 übermittelt werden, um dessen Status zu ändern. Hierzu muß der Antrieb des ausgewählten Klappenblattes z. B. 4.1 mit Strom versorgt werden, was ebenfalls über die BUS-Leitung 6 geschieht, wobei jedoch im Verteiler 5.1 eine Trennung der Stromversorgung in die Leitung 3.1 erfolgt, über die dann der Antrieb des Klappenblattes 4.1 mit dem notwendigen Strom versorgt wird.

Die Erfindung beschränkt sich nicht auf eine Anwendung in Verbindung mit Brandschutzklappen, sondern kann für die Stromversorgung, die Steuerung und die Überwachung samt Protokollierung von unterschiedlichsten Einrichtungen Verwendung finden. Derartige Einrichtungen können Rauchmelder, Beleuchtungskörper und insbesondere sämtliche Einrichtungen, bei denen unterschiedliche Stellungen mittels Positionsschaltern oder Endschaltern in das BUS-System eingegeben werden können. So lassen sich Fenster, Türen, Tore, etc. darauf hin überwachen, ob diese geöffnet oder geschlossen sind. Das Verfahren eignet sich aber auch für Maschinensteuerungen und sonstige Steuerungen, um irgendwelche Vorgänge in Verbindung mit Sensoren zu überwachen.

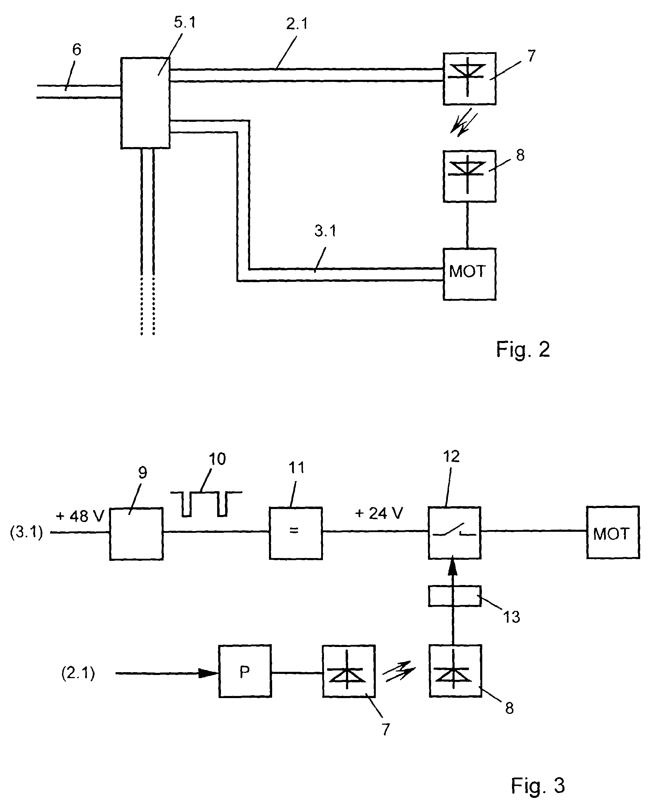

Das in Figur 2 dargestellte Blockschaltbild zeigt die Potentialtrennung zwischen der Steuerung eines Elektromotors MOT, der den Antrieb einer Brandschutzklappe oder einer anderen mechanisch zu betätigenden Einrichtung bildet. Am Verteiler 5.1 erfolgt die Aufteilung der BUS-Leitung 6 in die zur Überwachung und Steuerung dienende Überwachungsleitung 2.1 sowie in die Leitung 3.1 für die Stromversorgung des Antriebs. Der Antrieb erhält seine Steuersignale über Optokoppler 7, 8, wodurch eine Potentialtrennung zwischen dem Steuerkreis und der Stromversorgung des Antriebs gewährleistet ist.

Das in Figur 3 dargestellte Blockschaltbild veranschaulicht, wie eine von einer entfernten Stromversorgungseinheit eingespeiste Versorgungsspannung von 48 Volt zunächst in einem Signalwandler 9 in ein pulsweitenmoduliertes Signal 10 umgewandelt wird, welches dann in einem Gleichrichter 11 in eine gleichgerichtete Betriebsspannung von 24 Volt umgewandelt wird. Der Elektromotor MOT läßt sich über einen steuerbaren Schalter 12 betätigen.

Die zur Steuerung und Überwachung vorgesehene Überwachungsleitung 2.1 ist mit dem Eingang eines Prozessors P verbunden, der ausgangsseitig den Optokoppler 7 entsprechend den ankommenden Steuersignalen ansteuert.

Der Optokoppler 8 empfängt die vom Optokoppler 7 abgestrahlten Steuersignale in Form von Lichtsignalen, so daß über eine Ansteuerschaltung 13 der steuerbare Schalter 12 entsprechend betätigt werden kann, um beispielsweise die von dem Elektromotor MOT betätigbare Brandschutzklappe 1.1 zu schließen.

## Patentansprüche

1. Verfahren zum Überwachen und/oder Steuern von Einrichtungen (1.1 - 1.5), beispielsweise von Türen, Fenstern, Brandschutzklappen usw., deren Status von Sensoren überwacht und von Antrieben verändert wird, wobei die Sensoren über ein Datensignale übertragendes BUS-System mit einer BUS-Leitung (6) mit einer Zentrale in Verbindung stehen,
dadurch gekennzeichnet,
dass auch die Stromversorgung für die Antriebe über die Leitungsverbindungen des BUS-Systems erfolgt.

2. Verfahren nach Anspruch 1, dadurch gekennzeichnet, dass die Stromversorgung für die Antriebe erst kurz vor der jeweiligen Einrichtung von einer Überwachungsleitung (2.1 - 2.5) der Sensoren abgetrennt wird.

3. Anlage zur Durchführung des Verfahrens nach Anspruch 1 oder 2, dadurch gekennzeichnet, dass jeder Einrichtung (1.1 - 1.5) ein Verteiler (5.1 - 5.5) vorgeschaltet ist, in dem eine Aufteilung der zwischen den Verteilern und der Zentrale verlaufenden BUS-Leitung (6) in eine Überwachungsleitung (2.1 - 2.5) für die Sensoren und eine Leitung (3.1 - 3.5) für die Stromversorgung des Antriebs erfolgt.

4. Anlage nach Anspruch 3, dadurch gekennzeichnet, dass die BUS-Leitung (6) mehrere Verteiler (5.1 - 5.5) miteinander verbindet, die jeweils über eine Überwachungsleitung (2.1 - 2.5) und eine Leitung (3.1 - 3.5) für die Stromversorgung des Antriebs mit der Einrichtung (1.1 - 1.5) in Verbindung stehen.

5. Anlage nach einem der Ansprüche 3 oder 4, dadurch gekennzeichnet, daß die BUS-Leitung (6) als mehradriges Datenkabel mit einem Leitungsquerschnitt von weniger als 1 mm² pro Leitungsader ausgebildet ist.

6. Anlage nach Anspruch 5, dadurch gekennzeichnet, daß die BUS-Leitung (6) ein geschirmtes, 5-adriges Datenkabel ist.

7. Anlage nach einem der Ansprüche 3 bis 6, dadurch gekennzeichnet, daß in Abständen an die BUS-Leitung (6) Stromversorgungseinheiten angeschlossen sind, die zur Stromversorgung einer Vielzahl von an die BUS-Leitung (6) angeschlossenen stromverbrauchenden Einrichtungen (1.1 bis 1.5) und zum Ausgleich der Leitungsverluste dienen.

8. Anlage nach einem der Ansprüche 3 bis 7, dadurch gekennzeichnet, daß jeder Antrieb selektiv über das BUS-System ansteuerbar ist, wobei mittels Optokoppler (7, 8) eine Potentialtrennung zwischen den zur Steuerung und Überwachung dienenden Überwachungsleitungen (2.1 bis 2.5) des BUS-Systems und den Stromversorgungen der Antriebe erfolgt.

9. Anlage nach einem der Ansprüche 7 oder 8, dadurch gekennzeichnet, daß die Stromversorgungseinheiten eine Gleichspannung als Versorgungsspannung abgeben, die für die Stromversorgung der Antriebe oder anderer Leistungsverbraucher mittels eines Schaltnetzteils auf die erforderliche Betriebsspannung reduziert wird.

10. Anlage nach Anspruch 9, dadurch gekennzeichnet, daß die Versorgungsspannung im Bereich zwischen 40 Volt und 80 Volt, vorzugsweise zwischen 48 Volt und 60 Volt, liegt.

11. Anlage nach einem der Ansprüche 9 oder 10, dadurch gekennzeichnet, daß die Betriebsspannung bei etwa 24 Volt liegt.

12. Anlage nach einem der Ansprüche 9 bis 11, dadurch gekennzeichnet, daß das Schaltnetzteil die Versorgungsspannung in ein pulsweitenmoduliertes und/oder frequenzmoduliertes Signal umwandelt, welches durch Integration bzw. mittels eines Gleichrichters (11) in eine als Betriebsspannung dienende Gleichspannung umgewandelt wird.

13. Anlage nach einem der Ansprüche 3 bis 12, dadurch gekennzeichnet, daß die Leistungsaufnahme jedes Antriebs überwacht und nur eine so große Anzahl von Antrieben gleichzeitig betätigt wird, daß ein maximal zulässiger Leistungsverbrauch nicht überschritten wird.

14. Anlage nach einem de Ansprüche 3 bis 13, dadurch gekennzeichnet, daß eine festgestellte Abweichung der Leistungsaufnahme von einem vorgegebenen Leistungsbereich protokolliert wird und/oder eine Fehlermeldung auslöst.
